# EUROPÄISCHE PATENTSCHRIFT

(11) **EP 0 733 433 B1**
(45) Veröffentlichungstag und Bekanntmachung des Hinweises auf die Patenterteilung: **14.10.1998**
(21) Anmeldenummer: 96103525.0
(22) Anmeldetag: 07.03.1996
(51) Int. Cl.: B23P 19/06, E01B 9/48

(54) **Verfahren zum Ausrüsten von Schienenauflagekörpern, insbesondere Betonschwellen mit Schienenbefestigungsteilen**
Method of providing rail mounting bodies, particularly concrete sleepers with rail fastening elements
Procédé pour équiper des éléments d'appui pour rails, notamment des traverses en béton avec éléments de fixation des rails

(30) Priorität: 18.03.1995 DE 19509985
(43) Veröffentlichungstag der Anmeldung: 25.09.1996
(73) Patentinhaber: DYCKERHOFF & WIDMANN AG, 81902 München (DE)
(72) Erfinder:
(74) Vertreter: Patentanwälte Möll und Bitterich

(56) Entgegenhaltungen:
- EP-A- 0 134 761
- DE-A- 3 243 895
- DE-A- 4 238 757
- PATENT ABSTRACTS OF JAPAN vol. 00, no. 00 & JP-A-07 062603 (ISHIKAWAJIMA HARIMA HEAVY IND CO LTD), 7.März 1995,

## Beschreibung

Die Erfindung betrifft ein Verfahren zum Ausrüsten von Schienenauflagekörpern, insbesondere Beton- oder Spannbetonschwellen, mit den für die Befestigung der Schienen erforderlichen Teilen gemäß dem Oberbegriff des Anspruchs 1, sowie eine Matrize zum Zufuhren der Schienenbefestigungsteile an einen Montageroboter.

Beim Bau von Schienenwegen für Eisenbahnen werden Schienenauflagekörper, meist in Form von Querschwellen, in ein Schotterbett gelegt; über den Schwellen verlaufen die Schienen des Gleisstranges. Die Schwellen übernehmen dabei die Funktion der Lastverteilung auf den Untergrund. Zur kraftschlüssigen Verbindung der Schienen mit den Schwellen dienen sogenannte Schienenbefestigungsteile. Die Schienenbefestigungsteile umfassen in der Regel eine Lagerplatte unter dem Schienenfuß, seitlich der Schiene angeordnete Winkelführungsplatten zur Aufnahme von Horizontalkräften sowie Federbügel, die durch die Schwellenschrauben gegen den Schienenfuß gedrückt werden.

Bekannt sind Holzschwellen, bei denen die Schwellenschrauben zur Befestigung der Schienen unmittelbar in die Holzschwelle geschraubt werden. In letzter Zeit haben aber Beton-, insbesondere Spannbetonschwellen immer mehr an Bedeutung gewonnen, vor allem wegen ihrer hohen Festigkeit und ihrer langen Lebensdauer bei geringem Wartungsaufwand. Betonschwellen haben den Vorteil, daß ihre Oberfläche in den zur Auflagerung der Schienen bestimmten Bereichen der Form der Schienenbefestigungsteile genau angepaßt werden kann. Zur Aufnahme der Schwellenschrauben werden Dübel, meist Kunststoffdübel, bereits bei der Herstellung der Schwelle in den Schwellenkörper einbetoniert.

Wie auch die DE 42 38 757 A1, Sp. 1, z. 10 und 11 offenbart, erfolgt die Herstellung von Betonschwellen größtenteils vollautomatisch auf einer Fertigungsstraße in einem Betonfertigteilwerk. Dabei werden die Schwellen in einem letzten Arbeitsgang vor dem Lagern und Verfrachten mit den Schienenbefestigungsteilen ausgerüstet. Die Schienenbefestigungsteile werden dabei so auf der Schwelle vormontiert, daß nach Auflegen der Schiene auf der Baustelle nur noch die Schwellenschrauben gelockert, die Federbügel an ihren bestimmungsgemäßen Ort geschoben und die Schwellenschrauben wieder fest angezogen werden müssen.

Dieser letzte Arbeitsschritt im Werk wird bislang manuell durchgeführt. Dabei werden die einzelnen Schienenbefestigungsteile in entsprechender Reihenfolge einzeln auf die Schwellenoberfläche gelegt und durch Eindrehen der Schwellenschrauben in ihrer Lage fixiert. Die Größe des Anteils der lohn- und zeitintensiven Handarbeit bei dem Ausrüsten von Schwellen beeinflussen dabei maßgeblich die Kosten der Herstellung.

Neben durchgehenden Querschwellen, die als Monoblock-, Zweiblock- oder Gelenkschwellen bekannt sind, gibt es auch als Betonfertigteile ausgebildete Schienenauflagekörper zur Einzelpunktlagerung von Schienen auf einer durchgehenden Tragplatte aus Stahlbeton, z.B. bei der sogenannten "Festen Fahrbahn Bauart Rheda".

Vor diesem Hintergrund liegt der Erfindung die Aufgabe zugrunde, die Herstellung von Schienenauflagekörpern, insbesondere Schwellen, und dort vor allem das Ausrüsten derselben mit Schienenbefestigungsteilen, weiter zu verbessern, um so die Wirtschaftlichkeit zu steigern.

Gemäß der Erfindung wird diese Aufgabe durch ein Verfahren mit den Merkmalen des Anspruchs 1 sowie eine Matrize mit den Merkmalen des Anspruchs 4 gelöst.

Vorteilhafte Weiterbildungen ergeben sich aus den Unteransprüchen.

Der Grundgedanke der Erfindung besteht darin, die zum Vormontieren der Schienenbefestigungsteile bisher erforderlichen Arbeitskräfte durch einen Montageroboter zu ersetzen. Dadurch gelingt es, bei den Stückkosten den Anteil der Lohnkosten zu verringern. Außerdem ist ein Roboter hinsichtlich der Montagegeschwindigkeit der manuellen Montage überlegen. Durch den Einsatz eines Roboters kann die Bandgeschwindigkeit der Fertigungsstraße bis auf das Doppelte erhöht werden. Durch die Zuführung der Schienenbefestigungsteile auf einer Matrize in der Anordnung, wie sie auf der Schwelle vormontiert werden, reduziert sich die Anzahl der Spiele des Roboters zum Ausrüsten einer Schwelle auf zwei. Dies, verbunden mit der Möglichkeit, einen Roboter nahezu 24 Stunden am Tag zu betreiben, führt zu einer höheren Auslastung der Produktionsmittel, wodurch die Wirtschaftlichkeit des Herstellungsprozesses insgesamt gesteigert wird.

Schließlich wird durch den Einsatz eines Montageroboters auch eine gleichbleibend hohe Qualität bei der Verrichtung der Arbeit erzielt.

Die Erfindung wird nachstehend anhand eines in der Zeichnung dargestellten Ausführungsbeispiels erläutert. Es zeigen
- Fig. 1: einen Abschnitt einer Betonschwelle mit vormontierten Schienenbefestigungsteilen,
- Fig. 2: den Montageort mit Förderbandmontage, Roboter und Materialzuführung in der Draufsicht,
- Fig. 3: die Materialzuführung in Form eines Förderbandes in der Ansicht,
- Fig. 4: eine Matrize mit den darauf angeordneten Schienenbefestigungsteilen in Seitenansicht und
- Fig. 5: die in Fig. 4 dargestellte Matrize in der Draufsicht.

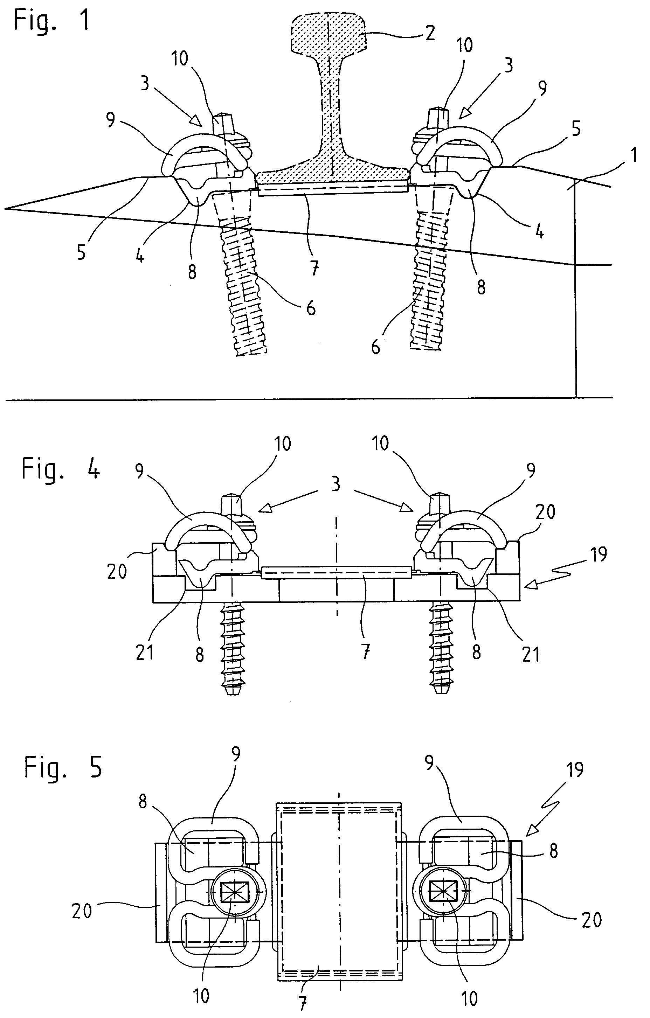

Fig. 1 zeigt einen für die Auflage der Schienen vorbereiteten Abschnitt einer Betonschwelle 1 im Längsschnitt. Die spätere Position der Schiene ist bei 2 gestrichelt angedeutet; die Schienenbefestigungsteile sind in ihrer Gesamtheit mit 3 bezeichnet. Die Schwelle 1 weist an ihrer Oberfläche Vertiefungen 4 und Erhöhungen 5 auf, die der Form der Schienenbefestigungsteile 3 entsprechen und diese dadurch in ihrer Lage fixieren. Im Bereich dieser Profilierungen sind außerdem noch zwei Kunststoffdübel 6 einbetoniert.

Im einzelnen bestehen die Schienenbefestigungsteile 3 aus einer Lagerplatte 7, die zwischen der Schwellenoberfläche und dem Fuß der Schiene 2 liegt und so für eine gleichmäßige Auflage der Schiene 2 auf der Schwelle 1 sorgt. In Längsrichtung der Schwelle 1 schließen sich zu beiden Seiten der Lagerplatte 7 Winkelführungsplatten 8 an. Ihr Wulst greift in die Vertiefungen 4 in der Schwelle 1 ein, so daß eine Verzahnung entsteht, über die Horizontalkräfte aus der Schiene 2 auf die Winkelführungsplatten 8 und von diesen auf die Schwelle 1 übertragen werden.

Die Winkelführungsplatten 8 werden durch die Schwellenschrauben 10 über jeweils einen Federbügel 9 (Fig. 5) auf die Schwellenoberfläche gepreßt. In dem in Fig. 1 dargestellten vormontierten Zustand drücken die Federbügel 9 mit ihren der Schiene 2 zugewandten Rindern auf die Winkelführungsplatten 8. Um von diesem vormontierten Zustand in den endgültigen Zustand zu gelangen, werden die Schwellenschrauben 10 gelockert und die Federbügel 9 nach innen gegen die inzwischen aufgelegte Schiene 2 verschoben, so daß ihre inneren Ränder auf dem Schienenfuß und die äußeren Ränder in die Vertiefung der Winkelführungsplatte 8 zu liegen kommen. Gehalten werden die Federbügel 9 jeweils von den Schwellenschrauben 10, die durch die Federbügel 9 und Winkelführungsplatten 8 hindurch in die Kunststoffdübel 6 in der Schwelle 1 greifen. Diese in Fig. 1 dargestellte Situation entspricht dem Zustand der Schwelle 1 nach Durchführung des erfindungsgemäßen Verfahrens.

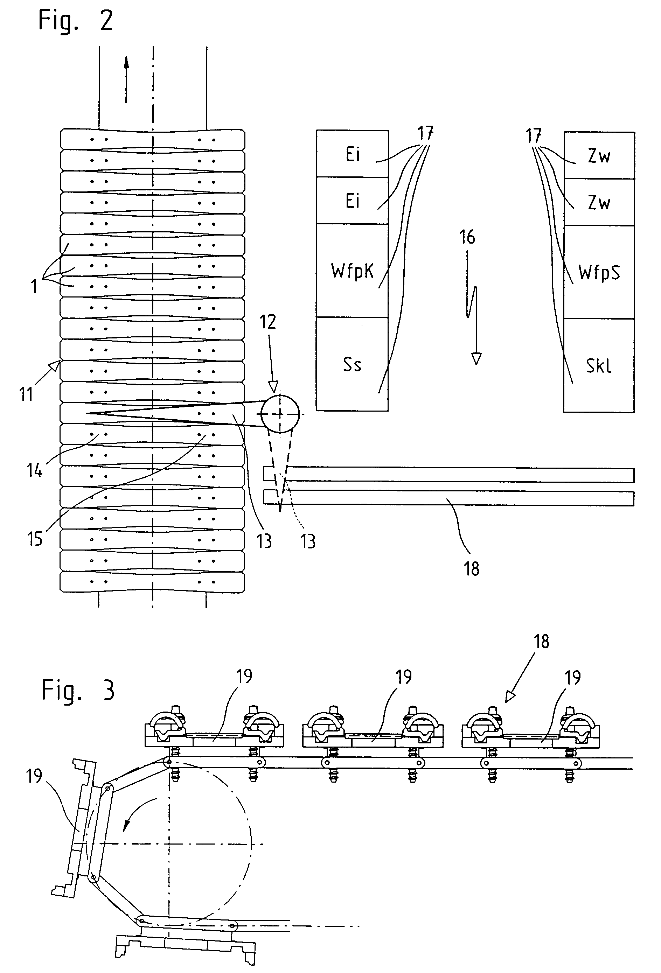

Die zur Durchführung des Verfahrens notwendigen Einrichtungen und deren Anordnung zueinander sind in Fig. 2 in der Draufsicht stellvertretend für viele Möglichkeiten dargestellt. Auf der linken Seite der Darstellung sieht man einen Endlosförderer, z.B. ein Förderband 11, das die erhärteten und vorgespannten Betonschwellen 1 in den Arbeitsbereich eines Montageroboters 12 und wieder herausführt. Der Montageroboter 12 steht dicht an dem Förderband 11, so daß er mit einem möglichst kurzen Greifarm 13 die beiden Montageorte 14, 15 auf der Schwelle 1 erreicht. Zur Anpassung an die verschiedenen Abstände zwischen Montageort 14, 15 und Roboter 12 ist der - nur schematisch dargestellte - Greifarm 13 vorteilhafterweise teleskopierbar oder mit einem Knickarm ausgerüstet.

Neben dem Montageroboter 12 ist auf der rechten Seite der Darstellung ein stationärer Arbeitsplatz 16 vorgesehen. Er umfaßt zum einen Behälter 17, in denen sich die sortierten Schienenbefestigungsteile 3 befinden, sowie ein weiteres Förderband 18, das zur Materialzuführung in den Arbeitsbereich des Montageroboters 12 führt und dort endet.

Fig. 3 zeigt eine Möglichkeit der Materialzuführung von dem stationären Arbeitsplatz 16 zum Montageroboter 12. Auf dem Förderband 18 sind hintereinander und in einem geschlossenen Kreislauf speziell gestaltete Matrizen 19 fest angebracht. Auf diese Matrizen 19 werden die aus den Behältern 17 entnommenen Schienenbefestigungsteile 3 aufgelegt. Sie transportieren die Schienenbefestigungsteile 3 im oberen Trum des Förderbandes 18 zum Montageroboter 12 und kehren im weiteren Verlauf, nachdem der Roboter 12 die Teile 3 der Matrize 19 entnommen hat, im unteren Trum zu dem stationären Arbeitsplatz 16 zurück.

Ein Beispiel für die Ausbildung der Matrize 19 zeigen die Fig. 4 und 5. Die Matrize 19 weist ähnlich der Oberfläche der Schwellen 1 in den für die Schienenauflagerung bestimmten Bereichen Erhöhungen 20 und Vertiefungen 21 auf, in die die Schienenbefestigungsteile 3 passen. Jedoch sind im Gegensatz zur Schwellenoberfläche die Erhöhungen 20 in den linken und rechten Randbereichen so bemessen, daß die Federbügel 9 an ihrem äußeren Ende so weit angehoben werden, bis sie mit den inneren, schlaufenförmigen und die Schwellenschrauben 10 haltenden Bereichen horizontal zu liegen kommen. Dadurch werden die Schwellenschrauben 10 in einer aufrechten Position hängend und im Abstand der Öffnungen der Schwellendübel 6 in der Schwellenoberfläche gehalten, so daß die freien Enden der Schwellenschrauben 10 beim Absetzen durch den Roboter die Mündungen der Schwellendübel 6 treffen und in diese eingedreht werden können.

Da die Matrizen 19 für verschiedene Schienenbefestigungsteile 3 je nach Schwellentyp einsetzbar sein sollen, können sie durch einen nicht dargestellten Verschiebemechanismus zum Beispiel teleskopartig an die jeweiligen Größen angepaßt werden. Als Alternative hierzu kann auch ein zweites, zum ersten paralleles Förderband mit einem anderen Matrizentyp eingesetzt werden oder aber die Matrizen 19 werden mittels eines Schnellverschlusses an dem Förderband 18 befestigt, so daß sie ohne große Mühe schnell ausgetauscht werden können.

Zur Durchführung des Verfahrens werden an dem stationären Arbeitsplatz 16 die leeren Matrizen 19 auf dem Förderband 18 mit den Schienenbefestigungsteilen 3 bestückt. Diese Teile entnimmt eine Arbeitskraft den jeweiligen Behältern 17 und setzt sie entsprechend ihrer späteren Lage auf der Schwelle 1 auf der Matrize 19 lose zusammen. Das Förderband 18 transportiert die so bestückten Matrizen 19 in den Arbeitsbereich des Montageroboters 12. Der nimmt die Schienenbefestigungsteile 3 mit seinem Greifarm 13 auf einmal auf, wobei sich die durch die Matrize 19 bedingte relative Lage der einzelnen Teile 3 zueinander nicht verändert, und setzt die Teile 3 an ihren bestimmungsgemäßen Platz auf der Schwelle 1. Dabei treffen die Schwellenschrauben 10 mit ihren freien unteren Enden genau in die in die Schwelle 1 einbetonierten Kunststoffdübel 6.

In einem weiteren Arbeitsgang werden entweder manuell oder auch vom Montageroboter 12 die Schwellenschrauben 10 eingedreht. Damit die Schwellenschrauben 10 das im Dübel 6 vorhandene Gewinde finden, kann die Schraube 10 erst kurz entgegen der Einschraubrichtung gedreht werden, bevor sie angezogen wird. Die so fertig vormontierten Schwellen 1 werden anschließend zum Verfrachten oder Lagern weitertransportiert.

Der Montagevorgang kann auch bei laufendem Förderband 11 erfolgen. Der Greifarm 13 des Roboters 12 geht dann dem Weg der Montageorte (Schienenauflagerpunkte) 14 und 15 nach.

## Patentansprüche

1. Verfahren zum Ausrüsten von Schienenauflagekörpern (1)***,*** insbesondere Beton- oder Spannbetonschwellen, mit den für die Befestigung der Schienen (2) erforderlichen Teilen (3)***,*** wie Schwellenschrauben (10)***,*** Federbügel (9)***,*** Winkelführungsplatten (8) usw., wobei diese Teile (3) auf den Schienenauflagekörpern (1) an den für die spätere Befestigung der Schienen (2) vorgesehenen Stellen vormontiert und durch Eindrehen der Schwellenschrauben (10) in Schwellendübel (6) vorläufig fixiert werden, dadurch gekennzeichnet, daß die Teile (3) für die Befestigung jeweils einer Schiene (2) in einer für die Vormontage geeigneten relativen Lage zueinander angeordnet, in dieser Lage von einem Montageroboter (12) aufgenommen und in einem Arbeitsschritt auf die Schienenauflagekörper (1) gesetzt werden, wobei die Schienenbefestigungsteile (3) auf einer Matrize (19) angeordnet sind und dem Montageroboter (12) zugeführt werden.

2. Verfahren nach Anspruch 1, dadurch gekennzeichnet, daß die Matrizen (19) dem Montageroboter (12) mittels eines Endlosförderers (18) zugeführt werden.

3. Verfahren nach einem der Ansprüche 1 bis 2***,*** dadurch gekennzeichnet, daß durch den Montageroboter (12) auch die Schwellenschrauben (10) eingedreht werden.

4. Matrize (19) zum Zuführen der Schienenbefestigungsteile (3) an einen Montageroboter (12) gemäß dem Verfahren nach einem der Ansprüche 1 bis 3, mit einer Grundplatte, die an der Oberfläche mit Profilierungen (20, 21) zur Halterung der zur Befestigung einer Schiene (2) an einem Schienenauflagekörper (1) erforderlichen Schienenbefestigungsteile (3) in einbaugerechter Position und Durchbrechungen für den Durchtritt der Schwellenschrauben (10) versehen ist.

5. Matrize nach Anspruch 4, dadurch gekennzeichnet, daß in den äußeren Bereichen der Matrize (19) beidseits der Position der Schiene (2) erhöhte Bereiche (20) zur Unterstützung der Federbügel (9) in einer Lage vorgesehen sind, die eine Halterung der Schwellenschrauben (10) in vertikal hängender Position ermöglichen.

## Claims

1. A method for providing rail support members (1), in particular concrete or prestressed concrete sleepers, with the parts (3) necessary for securing the rails (2), such as sleeper bolts (10), spring clips (9), angular guide plates (8) etc., wherein these parts (3) are preassembled on the rail support members (1) at the locations provided for the subsequent securing of the rails (2) and are provisionally fixed by screwing in the sleeper bolts (10) into sleeper dowels (6), characterised in that the parts (3) for securing each rail (2) are arranged in a suitable relative position for the preassembly, are received in this position by an assembly robot (12) and in one operating step are placed on the rail support member (1), the rail-securing parts (3) being disposed on a die (19) and are conveyed to the assembly robot (12).

2. A method according to Claim 1, characterised in that the dies (19) are conveyed to the assembly robot (12) by means of an endless conveyor (18).

3. A method according to either of Claims 1 and 2, characterised in that also the sleeper bolts (10) are screwed in by the assembly robot (12).

4. A die (19) for conveying the rail-securing parts (3) to an assembly robot (12) in accordance with the method according to any of Claims 1 to 3, with a base plate which on the surface is provided with corrugated portions (20,21) for mounting, in the correct installation position, the rail-securing parts (3) required for securing a rail (2) to a rail-support member (1), and with openings for the passage of the sleeper bolts (10).

5. A die according to Claim 4, characterised in that in the outer regions of the die (19) raised regions (20) are provided on either side of the position of the rail (2) for supporting the spring clip (9) in one position, which enable the sleeper bolts (10) to be retained in a vertically suspended position.

## Revendications

1. Procédé pour équiper des éléments d'appui pour les rails, notamment des traverses en béton ou en béton précontraint, avec les pièces (3) nécessaires pour la fixation des rails (2) telles que des tire-fonds (10), des brides de ressort (9), des plaques de guidage angulaire (8), etc., ces pièces (3) étant prémontées sur les éléments d'appui pour rails (1) aux emplacements prévus pour la fixation ultérieure des rails (2), et étant fixées provisoirement par pose des tire-fonds (10) dans des chevilles pour trous de traverses (6), caractérisé en ce que les pièces (3) pour la fixation respectivement d'un rail (2) sont disposées les unes par rapport aux autres dans une position relative appropriée pour le prémontage, sont réceptionnées dans cette position par un robot d'assemblage (12) et sont posées en une seule étape de travail sur les éléments d'appui pour rails (1), les pièces de fixation de rails (3) étant disposées sur une matrice (19) et amenées au robot d'assemblage (12).

2. Procédé selon la revendication 1, caractérisé en ce que les matrices (19) sont amenées au robot d'assemblage (12) au moyen d'un transporteur continu (18).

3. Procédé selon l'une quelconque des revendications 1 à 2, caractérisé en ce que les tire-fonds (10) sont posés également par le robot d'assemblage (12).

4. Matrice (19) pour l'arrivée des pièces de fixation de rails (3) sur un robot d'assemblage (12) conformément au procédé selon l'une quelconque des revendications 1 à 3, avec une plaque de base, qui est pourvue sur la face supérieure de profilages (20, 21) pour supporter les pièces de fixation de rails (3) nécessaires pour la fixation d'un rail (2) sur un élément d'appui pour rails (1) dans une position adaptée au montage et de découpures pour le passage des tire-fonds (10).

5. Matrice selon la revendication 4, caractérisée en ce que, dans les zones extérieures de la matrice (19) et des deux côtés de la position du rail (2), il est prévu des zones surélevées (20) pour soutenir les brides de ressort (9) dans une position qui permette une fixation des tire-fonds (10) dans une position d'accrochage verticale.
